# EUROPEAN PATENT APPLICATION

(11) **EP 3 779 406 A1**
(43) Date of publication of application: **17.02.2021**
(21) Application number: 19775850.1
(22) Date of filing: 26.03.2019
(51) Int. Cl.: G01N 17/00, G01N 27/26

(54) **METHOD FOR EVALUATING CHARACTERISTIC DETERIORATION OF MOVING BODY, CHARACTERISTIC DETERIORATION EVALUATION DEVICE, CHARACTERISTIC DETERIORATION SPEED MAP CREATION METHOD, AND CHARACTERISTIC DETERIORATION SPEED MAP CREATION DEVICE**

(30) Priority: 27.03.2018 JP 2018059739
(71) Applicant: Tokyo Electric Power Company Holdings, Incorporated, Tokyo 100-8560 (JP)
(72) Inventor: TATSUOKA, Teruhisa, Tokyo 100-8560 (JP); KISHIGAKI Nobuhiro, Tokyo 100-8560 (JP); OSADA Masanori, Tokyo 100-8560 (JP)
(74) Representative: EP&C
(86) International application number: PCT/JP2019/012784
(87) International publication number: WO 2019/189132

(57) **Abstract**

A characteristic deterioration evaluation method for moving bodies includes: evaluating a characteristic deterioration in a movement route of a second moving body which is the same as or different from a first moving body on the basis of a multiplication result obtained by multiplying a characteristic deterioration rate of a predetermined characteristic deterioration which is set for each of a plurality of areas on the basis of a result measured by measuring instruments installed in the first moving body and a time during which the second moving body passes through each of the areas.

## Description

### [Technical Field]

The present invention relates to a characteristic deterioration evaluation method for moving bodies, a characteristic deterioration evaluation device, a characteristic deterioration rate map creation method, and a characteristic deterioration rate map creation device.

Priority is claimed on Japanese Patent Application No. 2018-059739, filed March 27, 2018, the content of which is incorporated herein by reference.

### [Background Art]

The degree of corrosion of a structure in which a metal is used in part or in whole (hereinafter, also referred to as "metal structure") is evaluated. Examples of the metal structure include a steel structure. Further, examples of the evaluation of the degree of corrosion of the metal structure include measuring the degree of corrosion of the metal structure or predicting a life with respect to the corrosion of the metal structure (hereinafter, also referred to as "corrosion life").

The metal structures can be used at various places on the earth. Further, the metal structure can also be used in space.

Specifically, a case where the metal structure is used on land, a case where the metal structure is used on the sea or in the sea, a case where the metal structure is used in the air (sky), and the like are considered.

Examples of metal structures used on land include automobiles and railroads. Examples of metal structures used on the sea include ships.

Examples of metal structures used in the air include aircrafts.

For example, in order to predict the corrosion life of metal structures on land, measuring instruments are installed at a plurality of points near the surface of the earth in a predetermined area. As the measuring instrument, for example, a sensor which measures the corrosiveness of the environment on the basis of a change in exposed pieces of a metal material, an atmospheric corrosion monitor (ACM) sensor, or the like is used.

Further, information representing the results obtained by the measurement of such a measuring instrument is accumulated, and a map of a corrosion rate at each point in a predetermined area (hereinafter, also referred to as a "corrosion rate map") is created (generated) on the basis of the information. For example, the corrosion rate map may be created in consideration of not only the information indicating the result obtained by the measurement of the measuring instrument but also pre-existing terrain information, weather information, or the like.

Using such a corrosion rate map, a corrosion life evaluation can be performed on a metal structure on land.

In a ship which is a metal structure on the sea, the replacement of a structural member of which the plate thickness is reduced due to corrosion requires large-scale construction and is important to prevent economic loss due to the inoperability of the ship. For this reason, it is important to perform the corrosion life evaluation on ships, but there is no marine corrosion rate map corresponding to a land corrosion rate map.

Conventionally, for example, the corrosion state of a ship is grasped by visual inspection and ultrasonic plate thickness measurement when the ship is docked, and the progress of corrosion is predicted based on experience.

Even in an aircraft such as an airplane or a helicopter which is a metal structure in the air, it is necessary to secure the reliability of the aircraft. For this reason, it is important to perform the corrosion life evaluation on the aircraft, but there was no aerial corrosion rate map corresponding to the land corrosion rate map.

Conventionally, it is not possible to grasp a corrosion environment at an altitude at which an aircraft flies (for example, an altitude up to about 10,000 m).

Among metal structures or the like used on land, on the sea, and in the air as described above, in particular, a movable object such as an automobile, a ship, and an aircraft (hereinafter, also referred to as a "moving body") may move in various places, whereby it is difficult to estimate a corrosion rate.

For example, as for land, existing corrosion rate maps are created with the exception of special points where the corrosiveness of the environment differs from the surroundings due to the effect of smoke (exhaust gas) or the like, and it is difficult to estimate the corrosion rate near the special points.

Further, the degree of progress of corrosion of automobiles moving on the ground or railroads may be affected by wind turbulence due to the structures existing around the route along which the moving body moves, and thus it is difficult to estimate the corrosion rate. Further, as the use environment on land, for example, the presence or absence and the amount of snow-melting salt, the presence or absence of a puddle, and the like can be considered.

Further, there is a place, such as an elevated or underground tunnel, in which the ground height of the route along which the moving body moves changes, and it is difficult to estimate the corrosion rate. In particular, it may not be possible to perform an evaluation with sufficient accuracy in a corrosion rate map in which the ground height is not aligned.

Incidentally, even in a moving body which moves along a predetermined track such as a railroad, it may be difficult to estimate the corrosion rate due to differences in the environment in each area.

Further, even in the same automobile, the corrosion rate may differ depending on the parts.

As for the sea, ships, even ships of the same design, have considerably different corrosion states or the progress degrees of corrosion depending on the use environment after in-service, and thus, in some cases, sufficiently accurate evaluation cannot be performed in experiential predictions of corrosion progress. Here, for example, the use environment after in-service is an environment related to the components contained in seawater of a sea area where a ship passes, the temperature of the sea area, the humidity of the sea area, the wind direction or wind speed of the sea area, a wave height, an ocean current situation, a wave situation, a change in deposit concentration due to rainfall, or the like.

In order to estimate the corrosion rate, it is necessary to grasp the corrosion environment for each sea route as in the case of the land corrosion rate map, but in many cases, it is not easy to install equipment such as special measuring instruments on the sea.

Further, even the same ship or the like may have different corrosion rates for each part, for example, for a part immersed in water and a part not immersed in water.

As for the air, flying objects such as aircraft, even aircraft of the same design, have considerably different progress degrees of corrosion depending on the use environment during flight, and thus, in some cases, sufficiently accurate evaluation cannot be performed in experiential predictions of corrosion progress. Herein, the environment during flight is an environment related to a temperature at each altitude in a flight route, a humidity at each altitude, a difference in corrosive substances in the air at each altitude, the characteristics of an air flow, and the like.

Further, in the case of the air, the degree of freedom is high, and thus it is difficult to grasp a difference in the three-dimensionally distributed environment.

Further, even in the same aircraft or the like, the corrosion rate may be different for each part.

Incidentally, as an example of the prior art, Patent Document 1 describes a corrosion rate evaluation method in which a corrosion rate estimation formula is obtained by the multiple regression analysis method on the basis of the measurement result of the corrosion rate of the metal material, and the corrosion rate of the metal material in the non-measurement area is estimated and calculated on the basis of the obtained corrosion rate estimation formula (see Patent Document 1).

### [Citation List]

### [Patent Literature]

### [Patent Document 1]

Japanese Unexamined Patent Application, First Publication No. 2008-224405

### [Summary of Invention]

### [Technical Problem]

As described above, in the prior art, an accurate evaluation method is required to evaluate the degree of corrosion of the moving body which is a metal structure.

Further, although the characteristic deterioration due to corrosion is described above, an accurate evaluation method is required for characteristic deterioration other than corrosion such as characteristic deterioration due to radiation.

The present invention has been made in consideration of such circumstances, and a characteristic deterioration evaluation method for moving bodies which can accurately evaluate predetermined characteristic deterioration, a characteristic deterioration evaluation device, a characteristic deterioration rate map creation method, and a characteristic deterioration rate map creation device are provided for a moving body which is a metal structure.

### [Solution to Problem]

In one aspect of the present invention, a characteristic deterioration evaluation method for moving bodies includes: evaluating a characteristic deterioration in a movement route of a second moving body which is the same as or different from a first moving body on the basis of a multiplication result obtained by multiplying a characteristic deterioration rate of a predetermined characteristic deterioration which is set for each of a plurality of areas on the basis of a result measured by measuring instruments installed in the first moving body and a time during which the second moving body passes through each of the areas.

In one aspect of the present invention, in the characteristic deterioration evaluation method for moving bodies, the characteristic deterioration in the movement route of the second moving body is evaluated on the basis of a summation result obtained by summing the multiplication results for one or more areas which are evaluation targets.

In one aspect of the present invention, in the characteristic deterioration evaluation method for moving bodies, a position of the first moving body is detected, a correspondence between the position of the first moving body and the result measured by the measuring instrument is acquired, and the characteristic deterioration rate for each of the areas is set on the basis of the correspondence.

In one aspect of the present invention, in the characteristic deterioration evaluation method for moving bodies, different maps are used as a map of the characteristic deterioration rate for each of the areas in two or more periods.

In one aspect of the present invention, in the characteristic deterioration evaluation method for moving bodies, different measuring instruments are installed in a plurality of different portions of the same first moving body, and the characteristic deterioration for each of the portions is evaluated for the second moving body.

In one aspect of the present invention, the characteristic deterioration evaluation method for moving bodies includes: performing a determination regarding the characteristic deterioration on the basis of a result obtained by comparing a value of the multiplication result or a value obtained by using the multiplication result with a predetermined threshold value.

In one aspect of the present invention, in the characteristic deterioration evaluation method for moving bodies, the measuring instrument is a sensor which is configured to measure a value regarding corrosion or a sensor which is configured to measure a value regarding radiation.

In one aspect of the present invention, a characteristic deterioration evaluation device for moving bodies includes: a deterioration amount determiner which is configured to determine, as a characteristic deterioration amount, a multiplication result obtained by multiplying a characteristic deterioration rate of a predetermined characteristic deterioration which is set for each of a plurality of areas on the basis of a result measured by measuring instruments installed in a first moving body and a time during which a second moving body which is the same as or different from the first moving body passes through each of the areas; and a deterioration determiner which is configured to evaluate the characteristic deterioration in a movement route of the second moving body on the basis of the multiplication result determined by the deterioration amount determiner.

In one aspect of the present invention, a characteristic deterioration rate map creation method includes: setting a plurality of areas; and setting a characteristic deterioration rate of a predetermined characteristic deterioration for each of the plurality of areas on the basis of a result measured by measuring instruments installed in a first moving body and creating a characteristic deterioration rate map.

In one aspect of the present invention, a characteristic deterioration rate map creation device includes: an area setter which is configured to set a plurality of areas; and a characteristic deterioration rate setter which is configured to set a characteristic deterioration rate of a predetermined characteristic deterioration for each of the plurality of areas set by the area setter on the basis of a result measured by measuring instruments installed in a first moving body and creates a characteristic deterioration rate map.

### [Advantageous Effects of Invention]

According to the method described above, it is possible to accurately evaluate the predetermined characteristic deterioration of the moving body which is a metal structure.

### [Brief Description of Drawings]

Fig. 1 is a diagram showing a schematic constitution example of an aircraft mounted with measuring instruments and a management device according to an embodiment of the present invention.
Fig. 2 is a diagram showing a schematic constitution example of the management device according to the embodiment of the present invention.
Fig. 3 is a diagram showing a schematic constitution example of an information processing device according to the embodiment of the present invention.
Fig. 4 is a diagram showing an example of characteristics of a correspondence relation between a position and date and time and an output current of an ACM sensor according to the embodiment of the present invention.
Fig. 5 is a diagram showing an example of a corrosion rate for each area and an example of a route of an aircraft which is an evaluation target according to the embodiment of the present invention.
Fig. 6 is a diagram showing another example of characteristics of the correspondence relation between the position and date and time and the output current of the ACM sensor according to the embodiment of the present invention.
Fig. 7 is a diagram showing another example of a corrosion rate for each area and an example of a route of a moving body which is an evaluation target according to the embodiment of the present invention.
Fig. 8 is a diagram showing one example of a processing procedure in a characteristic deterioration evaluation method for moving bodies according to the embodiment of the present invention.
Fig. 9 is a diagram showing one example of the processing procedure in the characteristic deterioration evaluation method for moving bodies according to the embodiment of the present invention.
Fig. 10 is a diagram showing one example of the processing procedure in the characteristic deterioration evaluation method for moving bodies according to the embodiment of the present invention.

### [Description of Embodiments]

An embodiment of the present invention is described in detail with reference to the drawings.

### [Example of moving body in air]

First, an example of an aircraft which is a metal structure is described as an example of a moving body which moves on a route in the air.

### [Aircraft, measuring instruments, and management device]

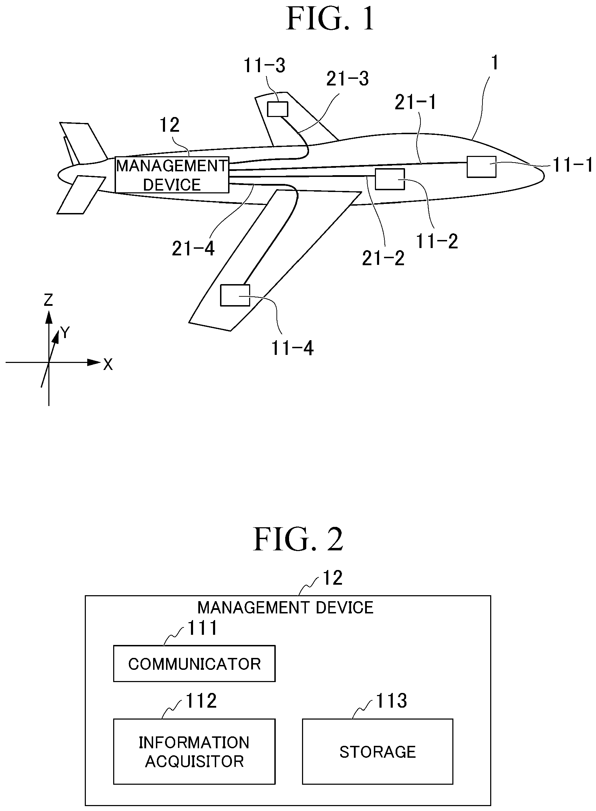

Fig. 1 is a diagram showing a schematic constitution example of an aircraft 1 mounted with measuring instruments 11-1 to 11-4 and a management device 12 according to an embodiment of the present invention.

For convenience of description, Fig. 1 represents an XYZ coordinate system which is a three-dimensional orthogonal coordinate system. Incidentally, in this embodiment, for convenience of description, the position is represented by three-dimensional orthogonal coordinates, but the position may be represented by any method such as latitude and longitude.

In the example of Fig. 1, the four measuring instruments 11-1 to 11-4 are installed at different locations on the aircraft 1. Further, the management device 12 is installed at a predetermined location of the aircraft 1. Further, the measuring instruments 11-1 to 11-4 are connected to the management device 12 via lines 21-1 to 21-4, respectively.

Each of the measuring instruments 11-1 to 11-4 is, for example, an ACM sensor, and measures (detects) the degree of metal corrosion.

Incidentally, for example, a known ACM sensor can be used as the ACM sensor. As an example, the ACM sensor includes a steel substrate, an insulation paste, and a conductor wire paste (Ag) having a slit portion, and measures current by using a non-resistance ammeter connected by a conductor between the steel substrate and the conductor wire paste. Thus, the person or device performing the evaluation can evaluate the corrosiveness of the environment on the basis of the magnitude of the current. In this case, for example, when the current is large, it is estimated that the corrosiveness of the environment is high (that is, the environment is worse). The magnitude of the corrosiveness is associated with a corrosion amount (corrosion rate) per unit time, for example.

Incidentally, in a case where a non-resistance ammeter is used, for example, the non-resistance ammeter may be included in the management device 12 or may be included in the ACM sensor side.

In the example of Fig. 1, the measuring instrument 11-1 is installed on the surface of the head of the aircraft 1 (a location in contact with the outside world), and the measuring instrument 11-2 is installed on the surface of the central portion of the aircraft 1, the measuring instrument 11-3 is installed on the surface near the tip of the left wing of the aircraft 1, and the measuring instrument 11-4 is installed on the surface near the tip of the right wing of the aircraft 1.

Here, as each of the measuring instruments 11-1 to 11-4, a measuring instrument which measures information on various characteristic deteriorations may be used. Specifically, in this embodiment, a case is described in which the characteristic deterioration due to the corrosion of the metal is evaluated by using the measuring instruments 11-1 to 11-4 which measure the information on the characteristic deterioration due to the corrosion of the metal. However, as another example, the invention may be applied to a case where the characteristic deterioration due to radiation is evaluated by using the measuring instruments 11-1 to 11-4 which measure the information on the characteristic deterioration due to the radiation. For example, the amount of radiation may be used as the information on the characteristic deterioration due to the radiation.

For example, each of the measuring instruments 11-1 to 11-4 is installed in the aircraft 1 at a location in which it is desired to grasp the state of characteristic deterioration due to corrosion. For example, each of the measuring instruments 11-1 to 11-4 may be installed at three-dimensionally different locations such that the coordinates are different in one or more directions among an X direction (for example, a length direction), an Y direction (for example, a width direction), and a Z direction (for example, a height direction) in the XYZ three-dimensional coordinate system.

Further, the number of the measuring instruments 11-1 to 11-4 installed in one moving body (in this embodiment, the aircraft 1) may be any number of one or more. That is, one moving body may be provided with one measuring instrument, or one moving body may be provided with a plurality of measuring instruments.

Incidentally, in this embodiment, each of the measuring instruments 11-1 to 11-4 is installed on the surface of the casing of the aircraft 1. However, for example, a constitution may be used in which one or more measuring instruments is installed inside the casing of the aircraft 1 (a location not in contact with the outside world).

The measuring instruments 11-1 to 11-4 transmit information indicating the measurement result (hereinafter, also referred to as "measurement result information") to the management device 12 via the respective lines 21-1 to 21-4.

Herein, various lines may be used as the respective lines 21-1 to 21-4. As each of the lines 21-1 to 21-4, for example, a wired line may be used or a wireless line may be used.

In a case where the lines 21-1 to 21-4 are wired lines, the lines 21-1 to 21-4 are arranged inside the casing of the aircraft 1, for example. However, as another example, the lines may be arranged outside the casing of the aircraft 1.

Further, in the example of Fig. 1, the management device 12 is installed inside the casing of the tail of the aircraft 1. However, the management device may be installed at another location of the aircraft 1.

Fig. 2 is a diagram showing a schematic constitution example of the management device 12 according to the embodiment of the present invention.

The management device 12 includes a communicator 111, an information acquisitor 112, and a storage 113.

The communicator 111 communicates information with the measuring instruments 11-1 to 11-4 via the respective lines 21-1 to 21-4.

In this embodiment, the communicator 111 receives the measurement result information transmitted from the measuring instruments 11-1 to 11-4 to the management device 12 via the respective lines 21-1 to 21-4.

The information acquisitor 112 acquires the information received by the communicator 111 from each of the measuring instruments 11-1 to 11-4. Further, the information acquisitor 112 stores the acquired information in the storage 113.

In this embodiment, the information acquisitor 112 stores the measurement result information received from each of the measuring instruments 11-1 to 11-4 in the storage 113.

The storage 113 is configured by using a memory, for example, and has a function of storing information.

Herein, in this embodiment, the information acquisitor 112 stores the measurement result information received from the measuring instruments 11-1 to 11-4 for the respective measuring instruments 11-1 to 11-4.

For example, the identification information for identifying the measuring instruments 11-1 to 11-4 is provided, and each of the measuring instruments 11-1 to 11-4 transmits the measurement result information together with the identification information of its own instrument (each of the measuring instruments 11-1 to 11-4) to the management device 12. The information acquisitor 112 stores the measurement result information in association with the identification information of each of the measuring instruments 11-1 to 11-4 on the basis of the information received from each of the measuring instruments 11-1 to 11-4.

Incidentally, any method may be used as a method for the information acquisitor 112 to store the measurement result information for each of the measuring instruments 11-1 to 11-4.

In the management device 12, for example, different storages may be provided as storages for storing the measurement result information for each of the measuring instruments 11-1 to 11-4.

The management device 12 may include, for example, a function of controlling each of the measuring instruments 11-1 to 11-4 (for example, a function of a controller). In this case, the management device 12 transmits the control information for controlling the measuring instruments 11-1 to 11-4 to the measuring instruments 11-1 to 11-4 via each of the lines 21-1 to 21-4 by the communicator 111, respectively. Further, the measuring instruments 11-1 to 11-4 receive the control information transmitted from the management device 12 to the measuring instruments 11-1 to 11-4 via the lines 21-1 to 21-4, respectively. Then, on the basis of the control information received from the management device 12, each of the measuring instruments 11-1 to 11-4 executes a process based on the control according to the control information.

For example, such control information may be transmitted from the management device 12 for each of the measuring instruments 11-1 to 11-4 or may be transmitted from the management device 12 as a control signal common to all the measuring instruments 11-1 to 11-4.

Herein, in this embodiment, each of the measuring instruments 11-1 to 11-4 acquires (measures) the measurement result information at every predetermined time interval. In this embodiment, the time interval is a measurement time interval. In this case, for example, each of the measuring instruments 11-1 to 11-4 may transmit the measurement result information to the management device 12 at predetermined time intervals or may transmit a plurality of pieces of measurement result information collectively to the management device 12 for a period corresponding to a plurality of predetermined time intervals.

In the management device 12, the information acquisitor 112 stores the measurement result information in the storage 113 for each of the measuring instruments 11-1 to 11-4 at each measurement time. As a result, the storage 113 stores time-series measurement result information arranged for each measurement time for each of the measuring instruments 11-1 to 11-4.

In this embodiment, the time-series measurement result information stored in the storage 113 includes information which is associated with each measurement result information and capable of specifying each measurement time. For example, as the information capable of specifying the measurement time, information that represents the measurement time using a predetermined unit such as year, day, hour, minute, or second is used.

Incidentally, in this embodiment, a case is described in which the measurement result information of the plurality of measuring instruments 11-1 to 11-4 is collectively stored by the common management device 12. However, as another example, a constitution may be used in which the management device 12 is not provided, and each of the plurality of measuring instruments 11-1 to 11-4 stores the measurement result information.

Further, for example, a constitution may be used in which the aircraft 1 is provided with a plurality of management devices 12, and the plurality of management devices 12 distribute and store the measurement result information of the plurality of measuring instruments 11-1 to 11-4.

In this embodiment, the information acquisitor 112 acquires information on the position of the aircraft 1.

For example, the information acquisitor 112 has a global positioning system (GPS) function and acquires the position information of the aircraft 1 by using the GPS function.

Herein, as the position of the aircraft 1, for example, a predetermined position of the aircraft 1 may be used, and as an example, a position where the management device 12 is installed may be used.

Further, as the position information, for example, information on the position itself may be used, or indirect information capable of specifying the position may be used. As the information on the position itself, for example, three-dimensional coordinates in the XYZ coordinate system may be used. As the indirect information capable of specifying the position, for example, information of the signal received from a GPS satellite may be used.

In the management device 12, the information acquisitor 112 stores the measurement result information in the storage 113 in association with the information on the position at which the measurement result information is measured. As a result, the storage 113 stores time-series measurement result information arranged for each measurement time in association with the position information for each of the measuring instruments 11-1 to 11-4.

Incidentally, various methods may be used as a method of acquiring information on the position of the aircraft 1.

For example, in a case where the movement route (the route of movement) of the aircraft 1 and the movement time schedule are grasped, a process of the information acquisitor 112 detecting and storing the position of the aircraft 1 may not need to be performed. In this case, the information on the position at which the measurement result information is measured can be acquired on the basis of the time corresponding to the measurement result information (measurement time) and the movement route of the aircraft 1 and the movement time schedule.

### [Information processing device (example of characteristic deterioration evaluation device)]

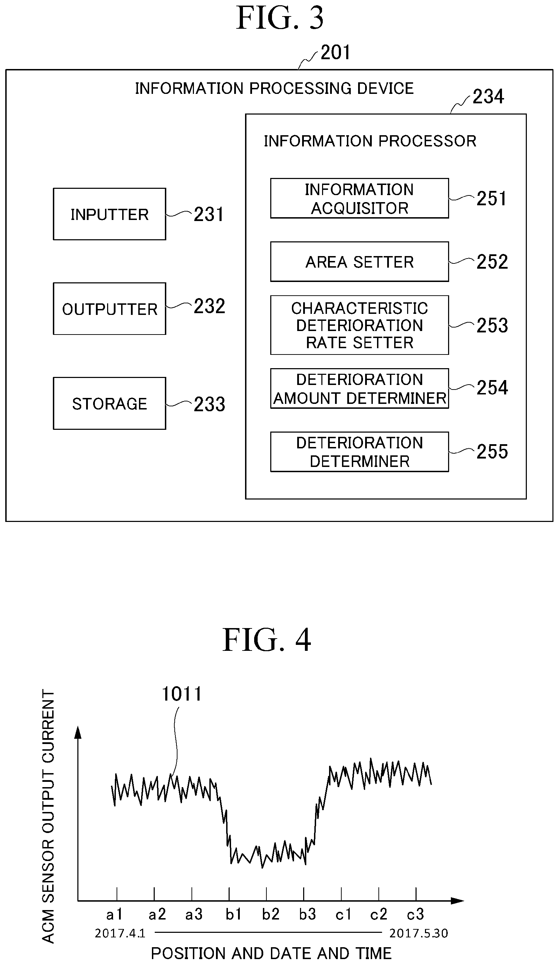

Fig. 3 is a diagram showing a schematic constitution example of an information processing device 201 according to the embodiment of the present invention. In this embodiment, the information processing device 201 is an example of a characteristic deterioration evaluation device for moving bodies and an example of a characteristic deterioration rate map creation device.

The information processing device 201 includes an inputter 231, an outputter 232, a storage 233, and an information processor 234.

The information processor 234 includes an information acquisitor 251, an area setter 252, a characteristic deterioration rate setter 253, a deterioration amount determiner 254, and a deterioration determiner 255.

Herein, in this embodiment, the aircraft 1 moves (flies) on a route in the air (aerial route) in a state where the plurality of measuring instruments 11-1 to 11-4 and the management device 12 are mounted. Thereafter, the information processing device 201 acquires the measurement result information for each of the measuring instruments 11-1 to 11-4 stored in the storage 113 of the management device 12 installed in the aircraft 1.

Herein, for example, the management device 12 may be integrated with the aircraft 1 or may be detachably attached to the aircraft 1. In a case where the management device 12 is integrated with the aircraft 1, for example, the management device 12 transmits information to the information processing device 201 via a wired or wireless line. Further, in a case where the management device 12 is configured to be detachably attached to the aircraft 1, for example, the management device 12 transmits information to the information processing device 201 in a state where the management device 12 is removed from the aircraft 1.

The outline of the processing performed in the information processing device 201 will be described.

For example, the information processing device 201 is configured using a computer.

The inputter 231 inputs information output from an external device. For example, the inputter 231 may input the information by receiving the information transmitted by wire or wirelessly from the external device. For example, the inputter 231 may input the information output from an external memory or the like (an example of the external device) connected to the information processing device 201. For example, the inputter 231 may include an operator operated by a user (person) and may input information according to the content of the operation of the operator.

The outputter 232 outputs information to an external device. For example, the outputter 232 may transmit (output) information to the external device by wire or wirelessly. For example, the outputter 232 may output information to an external memory or the like (an example of the external device) connected to the information processing device 201. For example, the outputter 232 may include a displayer which displays information and may display (output) information on the screen of the displayer.

In this embodiment, the inputter 231 inputs the information stored in the storage 113 of the management device 12. The information is the measurement result information acquired for each of the measuring instruments 11-1 to 11-4 in the aircraft 1 at each measurement time and is associated with the information on the position of the aircraft 1.

Incidentally, for example, the information transfer between the information processing device 201 and the management device 12 may be performed directly between the information processing device 201 and the management device 12 or may be performed indirectly between the information processing device 201 and the management device 12 via another device (for example, a relay device or an external memory).

The storage 233 stores information.

In this embodiment, the storage 233 stores, for example, the information input by the inputter 231.

Herein, in a case where the acquisition of the measurement result information by the measuring instruments 11-1 to 11-4 when the aircraft 1 as illustrated in Fig. 1 moves is performed on a plurality of aircraft, the storage 233 stores the measurement result information and the position information for each of the measuring instruments 11-1 to 11-4 at each measurement time for each aircraft 1.

Further, in this embodiment, the storage 233 stores information for performing evaluation based on the measurement result information. For example, the information includes information such as a program for performing the evaluation and parameters used in the program.

The information processor 234 performs various types of information processes in the information processing device 201.

The information acquisitor 251 acquires information used for the information process. For example, the information acquisitor 251 may acquire the information input by the inputter 231 or may acquire the information stored in the storage 233.

### <Creating map showing characteristic deterioration rate>

In this embodiment, the information acquisitor 251 acquires the measurement result information and the position information for each of the measuring instruments 11-1 to 11-4 at each measurement time for each aircraft 1.

Incidentally, as another example, the storage 233 may store the information on the movement route of the aircraft 1 and the information on the movement time schedule. In this case, on the basis of the time corresponding to the acquired measurement result information (measurement time) and the information stored in the storage 233 (the information on the movement route of the aircraft 1 and the information on the movement time schedule), the information acquisitor 251 may acquire the information on the position at which the measurement result information is measured.

The area setter 252 sets a plurality of areas.

In this embodiment, the area setter 252 sets the plurality of areas for an aerial area which is an area where the aircraft 1 moves. For example, the plurality of areas are a plurality of areas into which the aerial area is divided.

In this embodiment, each area is set as a three-dimensional area. For example, the three-dimensional area may be set by using the three-dimensional coordinates of the XYZ coordinate system.

Herein, for example, the area setter 252 may set the plurality of areas according to predetermined sections. In this case, the plurality of areas are predetermined areas. As the predetermined area, for example, an area for each name of the already-divided airspace (the name of the land area in the case of land and the name of the sea area in the case of the sea) may be used.

Further, for example, the area setter 252 may set a plurality of areas according to an instruction from the user. In this case, the plurality of areas are areas designated by the user or the like. The instruction from the user or the like is input by the inputter 231, for example.

Further, for example, the area setter 252 may set a plurality of areas on the basis of the information (for example, the measurement result information) acquired by the information acquisitor 251.

Further, for example, the area setter 252 may set a plurality of areas on the basis of other information.

Here, for example, it is preferable that the division is made such that the plurality of areas have the same or similar rate of characteristic deterioration (in this embodiment, the characteristic deterioration due to corrosion) noted in this embodiment.

As an example, in a case where such a division of a plurality of areas is grasped in advance from topography, weather, experience, and the like, each of the plurality of areas may be set in advance.

As another example, in a case where such a division of a plurality of areas can be grasped on the basis of the measurement result information acquired by the information acquisitor 251, each of the plurality of areas may be set on the basis of the measurement result information.

As still another example, a rough division of a plurality of areas may be set in advance as a temporary area, and then, an area obtained by correcting (adjusting) each temporary area on the basis of the measurement result information may be set as a final area.

The characteristic deterioration rate setter 253 sets information (hereinafter, also referred to as "characteristic deterioration rate information") indicating the rate of characteristic deterioration (hereinafter, also referred to as "characteristic deterioration rate") for each of the plurality of areas set by the area setter 252. In this embodiment, it is assumed that the characteristic deterioration rate is constant for each area.

Herein, the characteristic deterioration rate setter 253 sets the characteristic deterioration rate information in each of the plurality of areas on the basis of the measurement result information acquired by the information acquisitor 251.

Further, the characteristic deterioration rate setter 253 may set the characteristic deterioration rate information in each of the plurality of areas on the basis of the measurement result information and other information as well. The other information is, for example, predetermined information or information according to an instruction from the user or the like.

For example, on the basis of the measurement result information measured at a position included in each of areas (measurement result information corresponding to the position), the characteristic deterioration rate setter 253 sets the characteristic deterioration rate information in each of the areas.

For example, in a case where the measurement result information of a plurality of positions included in one area is present for one aircraft 1, the characteristic deterioration rate setter 253 may set the characteristic deterioration rate information of the area by using the average value of the measurement result information of the plurality of positions.

Further, for example, in a case where the measurement result information of a plurality of positions included in one area is present for two or more different aircraft 1, the characteristic deterioration rate setter 253 may set the characteristic deterioration rate information of the area by using the average value of the measurement result information of the plurality of positions.

Further, for example, in a case where a plurality of pieces of measurement result information of the same position are present for one aircraft 1 or two or more different aircrafts 1, the characteristic deterioration rate setter 253 may use the average value of the plurality of pieces of measurement result information as the measurement result information of the position.

Herein, an example is described in which in a case where a plurality of pieces of measurement result information of the same position are present in the same area or the same position, it is preferable to use the average value of the plurality of pieces of measurement result information. However, as another example, one or more pieces of measurement result information which are part of the plurality of pieces of measurement result information may be used.

Further, in a case where the average value of the plurality of pieces of measurement result information is used, when there is a difference in the reliability (probability) of each measurement result information, for example, a weighted average value may be used which is obtained by increasing a coefficient (weight) for multiplying the measurement result information as the reliability (probability) is higher.

The average value of the measurement result information acquired by the plurality of measuring instruments 11-1 to 11-4 installed in the same aircraft 1 may be used. In this case, for example, a weighted average value may be used by setting a coefficient (weight) that may be different for each location (a part of the aircraft 1) where each of the measuring instruments 11-1 to 11-4 is installed. As another example, the measurement result information acquired by a plurality of measuring instruments 11-1 to 11-4 installed in the same aircraft 1 may be used separately, and a separate evaluation may be performed for each location (a part of the aircraft 1) where each measuring instrument 11-1 to 11-4 is installed.

Incidentally, an integrated value or the like may be used instead of the average value.

When a plurality of areas are set by the area setter 252 and the characteristic deterioration rate information of each area is set by the characteristic deterioration rate setter 253, a map of characteristic deterioration rate information (hereinafter, also referred to as a "characteristic deterioration rate map") can be created for each of the plurality of areas.

In the information processor 234, the information of the characteristic deterioration rate map created by the characteristic deterioration rate setter 253 may be stored in the storage 233 by the characteristic deterioration rate setter 253 or the like.

In this embodiment, the characteristic deterioration due to the corrosion of the metal is used as the characteristic deterioration, the corrosion rate is used as the characteristic deterioration rate, and the corrosion rate map is used as the characteristic deterioration rate map.

Incidentally, in the area setting process by the area setter 252 or the characteristic deterioration rate setting process by the characteristic deterioration rate setter 253, for example, the characteristic deterioration rate map may be created in consideration of not only the measurement result information but also the terrain information, the weather information, or the like.

For example, the characteristic deterioration rate map may be created for each predetermined period. As a specific example, a characteristic deterioration rate map may be created which may be different for each season of spring, summer, autumn, and winter, or a characteristic deterioration rate map may be created which may be different for each month of January to December. That is, even in the same area, for each predetermined period, the environment or the like may be different, and the characteristic deterioration rate may be different. In such a case, it is preferable to use the characteristic deterioration rate map corresponding to each predetermined period.

Incidentally, in the characteristic deterioration rate map corresponding to each predetermined period, for example, for each predetermined period, the area may be different, or the characteristic deterioration rates of one or more areas may be different although the area is the same.

### <Evaluation of characteristic deterioration>

In this embodiment, for the aircraft which is a target for evaluating the characteristic deterioration, the information acquisitor 251 acquires information on the movement route of the aircraft and information on the movement time schedule. For example, these pieces of information may be stored in advance in the storage 233 or may be input by the user or the like.

Herein, for example, the aircraft which is a target for evaluating the characteristic deterioration may be the same aircraft as the aircraft 1 from which the measurement result information used to create the characteristic deterioration rate map is acquired or may be a different aircraft.

Further, in a case where there are a plurality of aircrafts 1 from which the measurement result information used to create the characteristic deterioration rate map is acquired, the aircraft which is a target for evaluating the characteristic deterioration may be included in the plurality of aircraft or may not be included.

For the aircraft which is a target for evaluating the characteristic deterioration, the deterioration amount determiner 254 specifies the area through which the aircraft passes and the time required for the aircraft to pass through each area on the basis of the information acquired by the information acquisitor 251 (the information on the movement route of the aircraft which is an evaluation target for characteristic deterioration and the movement time schedule). Herein, the time required for the aircraft to pass each area corresponds to the time the aircraft stays in each area.

The deterioration amount determiner 254 specifies the characteristic deterioration rate of each area on the basis of the already-created characteristic deterioration rate map. Incidentally, for example, the deterioration amount determiner 254 may use the characteristic deterioration rate map corresponding to each predetermined period.

Then, for the aircraft which is a target for evaluating the characteristic deterioration, the deterioration amount determiner 254 multiplies the characteristic deterioration rate of each area through which the aircraft passes and the time required to pass through the area and acquires this multiplication result as the characteristic deterioration amount in the area.

Further, the deterioration amount determiner 254 adds (sums) such multiplication results (the characteristic deterioration amount for each area) to all areas through which the aircraft passes and determines the addition result as the characteristic deterioration amount in the whole movement route of the aircraft. Incidentally, in this embodiment, this determination is a presumptive determination, and the determined characteristic deterioration amount is an estimated value.

Herein, there are a plurality of combinations of two values, and an operation of multiplying two values for each combination and summing the multiplication results may be called integration, for example.

The deterioration determiner 255 performs a determination on the characteristic deterioration on the basis of the characteristic deterioration amount determined by the deterioration amount determiner 254.

For example, the deterioration determiner 255 compares the characteristic deterioration amount determined by the deterioration amount determiner 254 with a predetermined threshold value (comparison of the magnitude relationship between these) to determine that a characteristic deterioration abnormality can occur in a case where the characteristic deterioration amount is equal to or more than the threshold value and to determine that the characteristic deterioration abnormality does not occur conversely in a case where the characteristic deterioration amount is less than the threshold value.

Incidentally, when two or more different threshold values are used as such threshold value, the deterioration determiner 255 can determine (classify) the characteristic deterioration amount into three or more different ranges.

Herein, in the information processor 234, the information acquired by the information acquisitor 251, the area set by the area setter 252, the characteristic deterioration rate set by the characteristic deterioration rate setter 253, the characteristic deterioration amount determined by the deterioration amount determiner 254, one or more pieces of information in the deterioration result by the deterioration determiner 255, or other information may be output on the screen of the displayer by the outputter 232. In this case, the user can grasp various information by looking at the screen.

### [Specific example for aircraft as moving body in air]

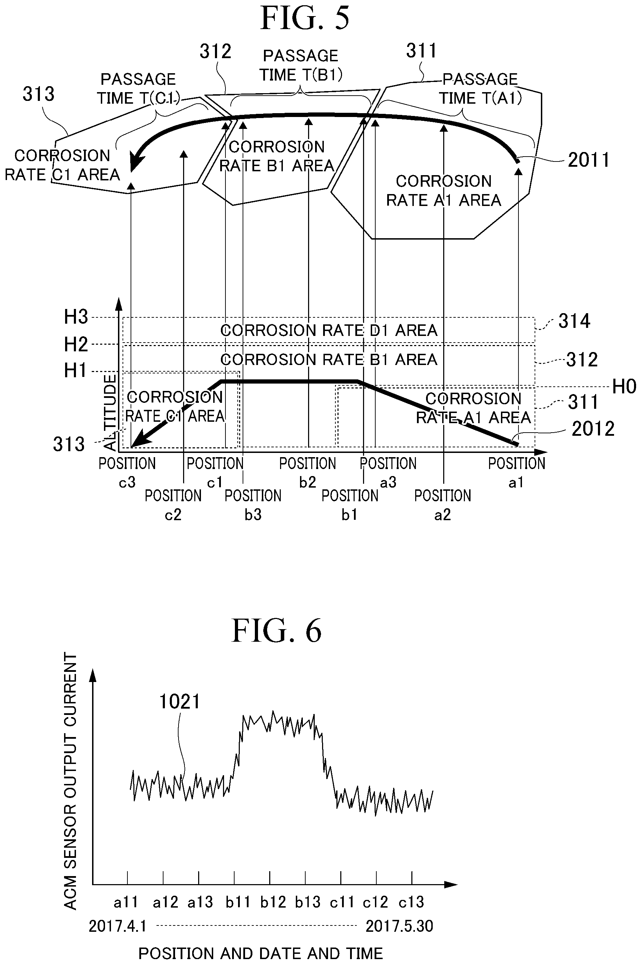

A specific example of the case of evaluating the characteristic deterioration of the aircraft due to corrosion is described with reference to Figs. 4 and 5.

Incidentally, the graphs and the like illustrated in Figs. 4 and 5 are schematically illustrated for the sake of explanation and are not necessarily exact.

In this example, in order to simplify the description, a case is described in which the evaluation is performed by using the measurement result information measured by one measuring instrument 11-1 in one aircraft 1.

In this example, an ACM sensor is used as the measuring instrument 11-1. In this example, the measurement result information is information indicating the output current detected (measured) by the ACM sensor.

In this example, information on the date and time including the year is used as information on the measurement time.

Incidentally, there is a one-to-one correspondence between the position of the aircraft 1 and the measurement time.

Fig. 4 is a diagram showing an example of a characteristic 1011 of the correspondence relationship between the position (point) and the date and time and the output current of the ACM sensor according to the embodiment of the present invention.

In the graph illustrated in Fig. 4, a horizontal axis represents the position and the date and time, and a vertical axis represents the output current of the ACM sensor. Then, in the graph, the characteristic 1011 of the correspondence relationship is shown.

Herein, the characteristic 1011 illustrated in Fig. 4 is a characteristic obtained on the basis of the measurement result information already acquired for the aircraft 1.

In this example, the description is given by paying attention to a place where the position of the aircraft 1 changes in order of a position a1, a position a2, a position a3, a position b1, a position b2, a position b3, a position c1, a position c2, and a position c3 according to the progress of the measurement time. Incidentally, similarly to this example, the same applies to other places as well.

In the example of Fig. 4, in comparison among the place (airspace) at the positions a1 to a3, the place at the positions b1 to b3, and the place at the positions c1 to c3, the output current of the ACM sensor is high at the positions a1 to a3, the output current of the ACM sensor is low at the positions b1 to b3, and the output current of the ACM sensor is high at the positions c1 to c3.

Fig. 5 is a diagram showing an example of the corrosion rate for each area and an example of the route of the aircraft which is an evaluation target according to the embodiment of the present invention.

In the example of Fig. 5, a plurality of areas, the corrosion rate for each area, the route of the aircraft as the evaluation target, and the time required when the aircraft passes through each area (hereinafter, also referred to as a "passage time") are shown. Incidentally, for example, the passage time may be obtained directly or may be obtained as the result obtained by dividing a passage distance by a moving speed.

Herein, the area and corrosion rate illustrated in Fig. 5 are set on the basis of the characteristic 1011 illustrated in Fig. 4.

In the example of Fig. 5, a plurality of areas 311 to 314 are indicated by dividing the area into an altitude position (in this embodiment, a position corresponding to the Z-axis coordinate) and a plane position other than the altitude (in this embodiment, a position corresponding to combination of the X-axis coordinate and the Y-axis coordinate). The area 311 is an area where the altitude position is in the range of 0 to H0 (H0 is a positive value), and the plane position corresponds to the range illustrated in Fig. 5, and includes the positions a1 to a3.

The area 313 is an area where the altitude position is in the range of 0 to H1 (H1 is a value larger than H0), and the plane position corresponds to the range illustrated in Fig. 5, and includes the positions c1 to c3.

The area 312 is an area where the altitude position is in the range of 0 to H2 (H2 is a value larger than H1), and the plane position corresponds to the range illustrated in Fig. 5. Further, the area 312 has areas of different altitudes, where the altitude position is in the range of H0 to H2, and the plane position corresponds to the same range as that of the area 311. Further, the area 312 has areas of different altitudes, where the altitude position is in the range of H1 to H2, and the plane position corresponds to the same range as that of the area 313. Then, the area 312 includes the positions b1 to b3.

The area 314 is an area where the altitude position is in the range of H2 to H3 (H3 is a value larger than H2), and the plane position corresponds to a combined range of areas 311 to 313.

The corrosion rate of the area 311 is set to be A1 (A1 is a predetermined value). The corrosion rate of the area 312 is set to be B1 (B1 is a predetermined value). The corrosion rate of the area 313 is set to be C1 (C1 is a predetermined value). The corrosion rate of the area 314 is set to be D1 (D1 is a predetermined value).

In the example of Fig. 5, the route of the aircraft as the evaluation target is indicated by combination of a route that represents a plane position (hereinafter, also referred to as a "planar route 2011") and a route that represents an altitude position (hereinafter, also referred to as an "altitude route 2012"). That is, the route of the aircraft as the evaluation target is a route connecting positions that satisfy both the planar route 2011 and the altitude route 2012.

As for the route of the aircraft as the evaluation target, the passage time in the area 311 is T(A1), the passage time in the area 312 is T(B1), and the passage time in the area 313 is T(C1) (T(A1), T(B1), and T(C1) are predetermined values).

Incidentally, in the example of Fig. 5, the route of the aircraft as the evaluation target does not include the position existing in the area 314.

In the example of Fig. 5, as for the route portions of the area 311, the area 312, and the area 313 in the route of the aircraft as the evaluation target, a result obtained by summing up {(corrosion rate Al) × (passage time T(A1))}, {(corrosion rate B1) × (passage time T(B1))}, and {(corrosion rate C1) × (passage time T(C1))} becomes an amount of characteristic deterioration due to corrosion.

For example, even in a case where the route of the aircraft as the evaluation target includes a route portion other than the areas 311 to 313, a case where the aircraft as the evaluation target moves on the same route multiple times, or a case where the aircraft as the evaluation target moves on different routes, the amount of characteristic deterioration due to corrosion for the entire movement can be obtained by summing up { (corrosion rate) × (passage time)} for all areas where the aircraft as the evaluation target passes.

Herein, in a case where the aircraft as the evaluation target passes through the same area two or more times, for example, for all of these two or more times of passages, {(corrosion rate) × (passage time)} in each passage is summed up to obtain the overall characteristic deterioration amount.

### [Human work]

In the example of Fig. 3, the description is given about the processes performed by the information processing device 201. However, some or all of the processes performed by the information processing device 201 may be performed by the user (person). For example, the user may execute various processes by operating a device such as the information processing device 201 or may execute various processes by human work without using such a device.

### [Evaluation timing]

For example, the process of evaluating the characteristic deterioration for the route of the moving body which is an evaluation target may be performed on the route after the moving body as the evaluation target actually moves on the route or may be performed on a planned route before the moving body as the evaluation target moves on the planned route.

Incidentally, after the moving body as the evaluation target actually moves on the route, for example, the area where the moving body passes actually and the actual passage time for each area can be grasped, so the area and the time may be used for evaluation.

Further, before the moving body as the evaluation target moves on the planned route, for example, the area where the moving body plans to pass and the planned passage time for each area can be grasped, so the area and the time may be used for evaluation.

As described above, there is no particular limitation on the timing of evaluating the characteristic deterioration for the route of the moving body as the evaluation target.

### [Specific examples of moving body on land or sea]

In general, with regard to a moving body on land or a moving body on the sea, the characteristic deterioration can be evaluated by using a three-dimensional area similarly to a moving body in the air.

However, the moving body in the air has a degree of freedom in altitude even at the same plane position while the moving body on land or the moving body on the sea usually has no or a small degree of freedom in altitude at the same plane position. In other words, in roads or railroads on land, sea routes on the sea, or the like, it is considered that the altitude position may change according to the plane position, but the moving body itself does not freely change the altitude position in many cases.

Therefore, in this example, a case is described in which the characteristic deterioration is evaluated by using a two-dimensional area for the moving body on land or the moving body on the sea.

In this example, the moving body on land or the moving body on the sea is simply referred to as a "moving body" for description.

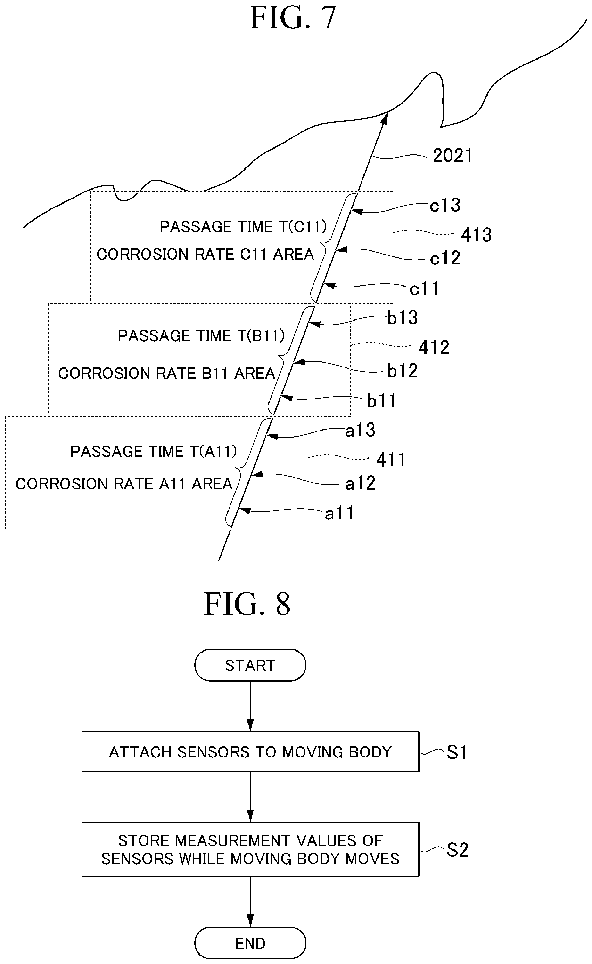

A specific example of the case of evaluating the characteristic deterioration of the moving body due to corrosion is described with reference to Figs. 6 and 7.

Incidentally, the graphs and the like illustrated in Figs. 6 and 7 are schematically illustrated for the sake of explanation and are not necessarily exact.

In this example, in order to simplify the description, a case is described in which the evaluation is performed by using the measurement result information measured by one measuring instrument in one moving body.

In this example, an ACM sensor is used as the measuring instrument. In this example, the measurement result information is information indicating the output current detected (measured) by the ACM sensor.

In this example, information on the date and time including the year is used as information on the measurement time.

Incidentally, there is a one-to-one correspondence between the position of the moving body and the measurement time.

Fig. 6 is a diagram showing another example of a characteristic 1021 of the correspondence relationship between the position (point) and the date and time and the output current of the ACM sensor according to the embodiment of the present invention.

In the graph illustrated in Fig. 6, a horizontal axis represents the position and the date and time, and a vertical axis represents the output current of the ACM sensor. Then, in the graph, the characteristic 1021 of the correspondence relationship is shown.

Herein, the characteristic 1021 illustrated in Fig. 6 is a characteristic obtained on the basis of the measurement result information already acquired for the moving body. For example, the moving body is the moving body itself as the evaluation target or another moving body which belongs to the same type (for example, a type such as an automobile, a railroad, or a ship) as the moving body as the evaluation target.

In this example, the description is given by paying attention to a place where the position of the moving body of which the measurement result information is already acquired changes in order of a position a11, a position a12, a position a13, a position b11, a position b12, a position b13, a position c11, a position c12, and a position c13 according to the progress of the measurement time. Incidentally, similarly to this example, the same applies to other places as well.

In the example of Fig. 6, in comparison among the place (a land area or a sea area) at the positions a11 to a13, the place at the positions b11 to b13, and the place at the positions c11 to cl3, the output current of the ACM sensor is low at the positions a11 to a13, the output current of the ACM sensor is high at the positions b11 to b13, and the output current of the ACM sensor is low at the positions c11 to cl3.

Fig. 7 is a diagram showing an example of the corrosion rate for each area and an example of the route of the moving body which is an evaluation target according to the embodiment of the present invention.

In the example of Fig. 7, a plurality of areas, the corrosion rate for each area, the route of the moving body as the evaluation target, and the time required when the moving body passes through each area (hereinafter, also referred to as a "passage time") are shown.

Herein, the area and corrosion rate illustrated in Fig. 7 are set on the basis of the characteristic 1021 illustrated in Fig. 6.

In the example of Fig. 7, the plurality of areas 411 to 413 are indicated by plane positions (in this embodiment, a position corresponding to combination of the X-axis coordinate and the Y-axis coordinate) other than the altitude.

The area 411 is an area where the plane position is equivalent to the range illustrated in Fig. 7, and includes the positions a11 to a13.

The area 412 is an area where the plane position is equivalent to the range illustrated in Fig. 7, and includes the positions b11 to b13.

The area 413 is an area where the plane position is equivalent to the range illustrated in Fig. 7, and includes the positions c11 to c13.

The corrosion rate of the area 411 is set to be A11 (All is a predetermined value). The corrosion rate of the area 412 is set to be B11 (B11 is a predetermined value).

The corrosion rate of the area 413 is set to be Cll (C11 is a predetermined value).

In the example of Fig. 7, the route of the moving body as the evaluation target is illustrated as a route indicating a plane position (hereinafter, also referred to as a "planar route 2021").

As for the route of the moving body as the evaluation target, the passage time in the area 411 is T(A11), the passage time in the area 412 is T(B11), and the passage time in the area 413 is T(C11) (T(A11), T(B11), and T(C11) are predetermined values).

In the example of Fig. 7, as for the route portions of the area 411, the area 412, and the area 413 in the route of the moving body as the evaluation target, a result obtained by summing up {(corrosion rate All) × (passage time T(A11))}, {(corrosion rate B11) × (passage time T(B11))}, and {(corrosion rate C11) × (passage time T(C11))} becomes an amount of characteristic deterioration due to corrosion.

For example, even in a case where the route of the moving body as the evaluation target includes a route portion other than the areas 411 to 413, a case where the moving body as the evaluation target moves on the same route multiple times, or a case where the moving body as the evaluation target moves on different routes, the amount of characteristic deterioration due to corrosion for the entire movement can be obtained by summing up {(corrosion rate) × (passage time)} for all areas where the moving body as the evaluation target passes.

Herein, in a case where the moving body as the evaluation target passes through the same area two or more times, for example, for all of these two or more times of passages, {(corrosion rate) × (passage time)} in each passage is summed up to obtain the overall characteristic deterioration amount.

### [Applicable places other than air, land, and sea]

Hereinbefore, a description is given about the moving body which moves in the air, on land, or on the sea. However, the same may be applied to a moving body which moves in another place.

Herein, for example, the another place is space, underground, or underwater. A space vehicle or satellite is an example of the moving body which moves in space, a robot which moves in the ground is an example of the moving body which moves underground, and a submarine is an example of the moving body which moves underwater.

[Example of processing procedure in characteristic deterioration evaluation method for moving bodies]

Figs. 8 to 10 are diagrams each showing one example of the processing procedure in the characteristic deterioration evaluation method for moving bodies according to the embodiment of the present invention.

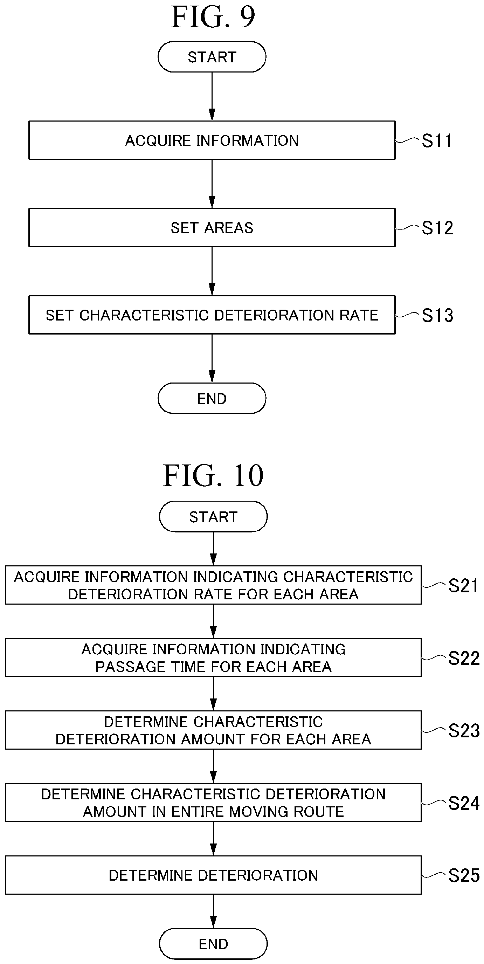

In this example, the process steps illustrated in Fig. 8, the process steps illustrated in Fig. 9, and the process steps illustrated in Fig. 10 are executed in this order.

The process steps illustrated in Fig. 8 will be described.

In the process steps illustrated in Fig. 8, the measurement result information measured when the moving body moves is acquired.

### (Step S1)

The user attaches sensors to the moving body. Then, the process proceeds to step S2.

Herein, the user may be any person, for example, a person who evaluates the characteristic deterioration of the moving body. Further, in this embodiment, although simply referred to as "user", a plurality of different people may be included, and the work may be shared by a plurality of different people.

Further, the moving body may be an arbitrary one.

Further, the sensors are examples of the measuring instruments 11-1 to 11-4.

### (Step S2)

When the moving body attached with the sensors moves, the management device 12 stores information (measurement result information) measured (detected) by the sensors.

The process steps illustrated in Fig. 9 will be described.

In the process steps illustrated in Fig. 9, a characteristic deterioration rate map is created.

### (Step S 11)

The information processing device 201 or the user acquires the information necessary for setting the area and the characteristic deterioration rate for each area. Then, the process proceeds to step S12. For example, the information includes the information stored in the management device 12.

### (Step S 12)

The information processing device 201 or the user sets a plurality of areas. Then, the process proceeds to step S13.

Herein, for example, the areas are set in a range capable of covering the movement route of the moving body as the evaluation target.

### (Step S13)

The information processing device 201 or the user sets the characteristic deterioration rate for each of the set areas on the basis of the measurement result information acquired in each area. Accordingly, a characteristic deterioration rate map is created.

Herein, for example, the characteristic deterioration rate map may be created when it is necessary to perform evaluation by using the characteristic deterioration rate map or may be created in advance. Further, for example, as the characteristic deterioration rate map, a plurality of different characteristic deterioration rate maps may be created for each season.

The process steps illustrated in Fig. 10 will be described.

In the process steps illustrated in Fig. 10, the characteristic deterioration is evaluated for the movement route of the moving body as the evaluation target. Incidentally, for example, this evaluation may be performed on the basis of the information of the route on which the moving body as the evaluation target already moves or on the basis of the route on which the moving body as the evaluation target plans to move (a route on which the moving body has not moved yet).

Herein, the moving body as the evaluation target does not need to be equipped with the measuring instruments 11-1 to 11-4 and the management device 12.

### (Step S21)

For the movement route of the moving body as the evaluation target, the information processing device 201 or the user acquires information indicating the characteristic deterioration rate for each area included in the route. Then, the process proceeds to step S22.

### (Step S22)

For each area, the information processing device 201 or the user acquires information indicating the time (passage time) during which the moving body as the evaluation target passes through each of the areas. Then, the process proceeds to step S23.

### (Step S23)

The information processing device 201 or the user determines the characteristic deterioration amount for each area through which the moving body as the evaluation target passes. Then, the process proceeds to step S24. For example, the characteristic deterioration amount in each area is represented by the multiplication result of the characteristic deterioration rate set in each area and the passage time.

### (Step S24)

The information processing device 201 or the user determines the characteristic deterioration amount in the entire movement route of the moving body as the evaluation target. Then, the process proceeds to step S25. For example, the characteristic deterioration amount in the entire movement route is represented by the result of summing up the characteristic deterioration amounts for all areas included in the movement route.

### (Step S25)

The information processing device 201 or the user performs a predetermined determination process on the characteristic deterioration amount in the entire movement route of the moving body as the evaluation target.

Here, various determination processes may be performed as the predetermined determination process.

For example, as the predetermined determination process, a process of determining whether or not the characteristic deterioration amount in the entire movement route of the moving body as the evaluation target is equal to or larger than a predetermined threshold value may be performed. In this case, when the characteristic deterioration amount is equal to or more than the threshold value, it is estimated that the characteristic deterioration is progressing in the entire movement route. Further, for example, matters such as "the characteristic deterioration amount is within an allowable range", "the characteristic deterioration amount is within a range to be noted", and "the characteristic deterioration amount is large enough to require a predetermined maintenance" may be determined on the basis of the magnitude relationship between the characteristic deterioration amount and one or more threshold values.

Further, for example, as the predetermined determination process, a process of determining whether or not the characteristic deterioration amount in a portion of one or more areas in the movement route of the moving body as the evaluation target is equal to or larger than a predetermined threshold value may be performed. In this case, when the characteristic deterioration amount is equal to or more than the threshold value, it is estimated that the characteristic deterioration is progressing in the portion of the one or more areas.

As described above, in the characteristic deterioration evaluation device according to this embodiment (in this embodiment, the information processing device 201), a predetermined characteristic deterioration can be evaluated accurately with respect to a moving body which is a metal structure in the air, on land, on the sea, or the like. For example, the predetermined characteristic deterioration is characteristic deterioration due to progress of corrosion, characteristic deterioration due to receiving radiation, or the like. Further, the moving body as the evaluation target does not need to be equipped with the measuring instruments 11-1 to 11-4 and the management device 12.

Further, also in the characteristic deterioration evaluation method according to this embodiment, it is possible to obtain the same effects as those described for the characteristic deterioration evaluation device. Herein, in the characteristic deterioration evaluation method according to this embodiment, for example, each process may be performed by a device (for example, a characteristic deterioration evaluation device), each process may be performed by the user (person), or each process may be shared by both the device and the user.

As described above, in the characteristic deterioration rate map creation device according to this embodiment (in this embodiment, the information processing device 201), a characteristic deterioration rate map which is useful in accurately evaluating a predetermined characteristic deterioration can be created on the basis of the information measured when a moving body which is a metal structure in the air, on land, on the sea, or the like moves.

Further, also in a characteristic deterioration rate map creation method according to this embodiment, it is possible to obtain the same effects as those described for the characteristic deterioration rate map creation device. Herein, in the characteristic deterioration rate map creation method according to this embodiment, for example, each process may be performed by a device (for example, a characteristic deterioration rate map creation device), each process may be performed by the user (person), or each process may be shared by both the device and the user.

Incidentally, in this embodiment, the three-dimensional characteristic deterioration rate map or the two-dimensional characteristic deterioration rate map is described. However, for example, as in a case where one track (movement route) of the railroad is regarded as a one-dimensional coordinate system, a one-dimensional characteristic deterioration rate map may be created or used.

Herein, in this embodiment, for example, a detailed characteristic deterioration rate map can be created which reflects information on characteristic deterioration at a local position grasped from the movement of the moving body and is suitable for the actual environment. For example, it is possible to create a characteristic deterioration rate map on land or the like at a special point affected by smoke exhaust or the like or at a ground height of about a dozen meters or less affected by buildings or the like.

Incidentally, for example, the characteristic deterioration rate map may be created on the basis of the measurement result information measured in one movement of one moving body, may be created on the basis of the measurement result information measured in the movement of a plurality of moving bodies, or may be created on the basis of the measurement result information measured in a plurality of times of movements. For example, by accumulating the measurement result information measured in the movement of the plurality of moving bodies or the measurement result information measured in the plurality of times of movements and creating a characteristic deterioration rate map on the basis of the accumulated information, it is possible to improve the accuracy of the characteristic deterioration rate map.

For example, by paying attention to one moving body, estimated characteristic deterioration amounts are summed (cumulatively added) every time the moving body moves, and the timing of painting the moving body, the timing of repairing the moving body, the priority order of painting of a predetermined moving body among a plurality of moving bodies, and the like can be determined on the basis of the total characteristic deterioration amount. Accordingly, for example, inspection, maintenance, or the like can be efficiently performed at an optimum timing.

Incidentally, in this embodiment, a case is described in which the characteristic deterioration rate map obtained on the basis of the measurement result information acquired when the moving body moves is used to evaluate a moving body which is the same as or different from the moving body. However, as another example, fixed equipment other than the moving body may be evaluated by using the characteristic deterioration rate map obtained on the basis of the measurement result information acquired when the moving body moves. In such a case, for example, multiple regression analysis or the like may be used for the evaluation if necessary.

### <Constitution example>

As one constitution example, a characteristic deterioration evaluation method for moving bodies includes: evaluating a characteristic deterioration in a movement route of a second moving body which is the same as or different from a first moving body on the basis of a multiplication result (in this embodiment, the characteristic deterioration amount) obtained by multiplying a characteristic deterioration rate of a predetermined characteristic deterioration which is set for each of a plurality of areas on the basis of a result measured by measuring instruments (in the example of Fig. 1, the measuring instruments 11-1 to 11- 4) installed in the first moving body (the aircraft 1 in the example of Fig. 1) and a time during which the second moving body (a moving body which is an evaluation target) passes through each of the areas.

As one constitution example, in the characteristic deterioration evaluation method for moving bodies, the characteristic deterioration in the movement route of the second moving body is evaluated on the basis of a summation result (total characteristic deterioration amount) obtained by summing the multiplication results for one or more areas which are evaluation targets.

As one constitution example, in the characteristic deterioration evaluation method for moving bodies, a position of the first moving body is detected, a correspondence between the position of the first moving body and the result measured by the measuring instrument is acquired, and the characteristic deterioration rate for each of the areas is set on the basis of the correspondence.

As one constitution example, in the characteristic deterioration evaluation method for moving bodies, different maps are used as a map (characteristic deterioration rate map) of the characteristic deterioration rate for each of the areas in two or more periods.

As one constitution example, in the characteristic deterioration evaluation method for moving bodies, different measuring instruments are installed in a plurality of different portions of the same first moving body, and the characteristic deterioration for each of the portions is evaluated for the second moving body.

As one constitution example, the characteristic deterioration evaluation method for moving bodies includes: performing a determination regarding the characteristic deterioration on the basis of a result obtained by comparing a value (for example, the characteristic deterioration amount for each area) of the multiplication result or a value (for example, a total value of the characteristic deterioration amounts in two or more areas) obtained by using the multiplication result with a predetermined threshold value.

As one constitution example, in the characteristic deterioration evaluation method for moving bodies, the measuring instrument is a sensor which is configured to measure a value regarding corrosion (for example, an ACM sensor) or a sensor which is configured to measure a value regarding radiation.

As one constitution example, a characteristic deterioration evaluation device for moving bodies (in the example of Fig. 3, the information processing device 201) includes: a deterioration amount determiner (in the example of Fig. 3, the deterioration amount determiner 254) which is configured to determine, as a characteristic deterioration amount, a multiplication result obtained by multiplying a characteristic deterioration rate of a predetermined characteristic deterioration which is set for each of a plurality of areas on the basis of a result measured by measuring instruments installed in a first moving body and a time during which a second moving body which is the same as or different from the first moving body passes through each of the areas; and a deterioration determiner (in the example of Fig. 3, the deterioration determiner 255) which is configured to evaluate the characteristic deterioration in a movement route of the second moving body on the basis of the multiplication result determined by the deterioration amount determiner.

As one constitution example, a characteristic deterioration rate map creation method includes: setting a plurality of areas; and setting a characteristic deterioration rate of a predetermined characteristic deterioration for each of the plurality of areas on the basis of a result measured by measuring instruments installed in a first moving body and creating a characteristic deterioration rate map.

As one constitution example, a characteristic deterioration rate map creation device (in the example of Fig. 3, the information processing device 201) includes: an area setter (in the example of Fig. 3, the area setter 252) which is configured to set a plurality of areas; and a characteristic deterioration rate setter (in the example of Fig. 3, the characteristic deterioration rate setter 253) which is configured to set a characteristic deterioration rate of a predetermined characteristic deterioration for each of the plurality of areas set by the area setter on the basis of a result measured by measuring instruments installed in a first moving body and creates a characteristic deterioration rate map.

Incidentally, as described above, a program for realizing a function of the device (for example, the information processing device 201) according to the embodiment may be stored (recorded) in a computer-readable storage medium (recording medium), and a process may be performed by causing a computer system to read and execute the program stored in this storage medium.

Incidentally, the "computer system" here may include an operating system (OS) or hardware such as peripheral devices.

Further, the "computer-readable storage medium" means a writable non-volatile memory such as a flexible disk, a magneto-optical disk, a read only memory (ROM), and a flash memory, a portable medium such as a digital versatile disc (DVD), or a storage device such as a hard disk built in the computer system.

Further, the "computer-readable storage medium" includes a medium, which holds the program for a certain period of time, such as a volatile memory (for example, a dynamic random access memory (DRAM)) inside a computer system to be a server or a client when the program is transmitted through a network such as the Internet or a communication line such as a telephone line.

Further, the above program may be transmitted from the computer system storing the program in the storage device or the like to another computer system via a transmission medium or by transmission waves in the transmission medium. Herein, the "transmission medium" for transmitting the program means a medium, which has a function of transmitting information, such as a network (communication network) such as the Internet or a communication line (communication line) such as a telephone line.

Further, the above program may be a program for realizing a part of the function described above. Further, the above program may be a so-called difference file (difference program) which can realize the above-described function in combination with a program already recorded in the computer system.

Although the embodiment of the present invention has been described in detail above with reference to the drawings, the specific constitution is not limited to this embodiment, and includes design changes and the like within a range not departing from the gist of the present invention.

### [Reference Signs List]

1 Aircraft
11-1 to 11-4 Measuring instrument
21-1 to 21-4 Line
12 Management device
111 Communicator
112, 251 Information acquisitor
113, 233 Storage
201 Information processing device
231 Inputter
232 Outputter
234 Information processor
252 Area setter
253 Characteristic deterioration rate setter
254 Deterioration amount determiner
255 Deterioration determiner
311 to 314, 411 to 413 Area
1011, 1021 Characteristic
2011, 2021 Planar route
2012 Altitude route

## Claims

1. A characteristic deterioration evaluation method for moving bodies, the method comprising:
evaluating a characteristic deterioration in a movement route of a second moving body which is same as or different from a first moving body on the basis of a multiplication result obtained by multiplying a characteristic deterioration rate of a predetermined characteristic deterioration which is set for each of a plurality of areas on the basis of a result measured by measuring instruments installed in the first moving body and a time during which the second moving body passes through each of the areas.

2. The characteristic deterioration evaluation method for moving bodies according to claim 1, wherein
the characteristic deterioration in the movement route of the second moving body is evaluated on the basis of a summation result obtained by summing the multiplication results for one or more areas which are evaluation targets.

3. The characteristic deterioration evaluation method for moving bodies according to claim 1 or 2, wherein
a position of the first moving body is detected, a correspondence between the position of the first moving body and the result measured by the measuring instrument is acquired, and the characteristic deterioration rate for each of the areas is set on the basis of the correspondence.

4. The characteristic deterioration evaluation method for moving bodies according to any one of claims 1 to 3, wherein
different maps are used as a map of the characteristic deterioration rate for each of the areas in two or more periods.

5. The characteristic deterioration evaluation method for moving bodies according to any one of claims 1 to 4, wherein
different measuring instruments are installed in a plurality of different portions of the same first moving body, and the characteristic deterioration for each of the portions is evaluated for the second moving body.

6. The characteristic deterioration evaluation method for moving bodies according to any one of claims 1 to 5, the method comprising:
performing a determination regarding the characteristic deterioration on the basis of a result obtained by comparing a value of the multiplication result or a value obtained by using the multiplication result with a predetermined threshold value.

7. The characteristic deterioration evaluation method for moving bodies according to any one of claims 1 to 6, wherein
the measuring instrument is a sensor which is configured to measure a value regarding corrosion or a sensor which is configured to measure a value regarding radiation.

8. A characteristic deterioration evaluation device for moving bodies, the device comprising:
a deterioration amount determiner which is configured to determine, as a characteristic deterioration amount, a multiplication result obtained by multiplying a characteristic deterioration rate of a predetermined characteristic deterioration which is set for each of a plurality of areas on the basis of a result measured by measuring instruments installed in a first moving body and a time during which a second moving body which is the same as or different from the first moving body passes through each of the areas; and
a deterioration determiner which is configured to evaluate the characteristic deterioration in a movement route of the second moving body on the basis of the multiplication result determined by the deterioration amount determiner.

9. A characteristic deterioration rate map creation method comprising:
setting a plurality of areas; and
setting a characteristic deterioration rate of a predetermined characteristic deterioration for each of the plurality of areas on the basis of a result measured by measuring instruments installed in a first moving body and creating a characteristic deterioration rate map.

10. A characteristic deterioration rate map creation device comprising:
an area setter which is configured to set a plurality of areas; and
a characteristic deterioration rate setter which is configured to set a characteristic deterioration rate of a predetermined characteristic deterioration for each of the plurality of areas set by the area setter on the basis of a result measured by measuring instruments installed in a first moving body and creates a characteristic deterioration rate map.
